# EUROPÄISCHE PATENTSCHRIFT

(11) **EP 2 001 699 B1**
(45) Veröffentlichungstag und Bekanntmachung des Hinweises auf die Patenterteilung: **17.10.2012**
(21) Anmeldenummer: 07703271.2
(22) Anmeldetag: 05.02.2007
(51) Int. Cl.: B60K 35/00, B60K 37/06, H01H 21/24

(54) **MULTIFUNKTIONALE ANZEIGE- UND BEDIENEINRICHTUNG IN EINEM KRAFTFAHRZEUG**
MULTIFUNCTIONAL DISPLAY AND OPERATING DEVICE IN A MOTOR VEHICLE
DISPOSITIF DE COMMANDE ET D'AFFICHAGE MULTIFONCTION DANS UN VÉHICULE À MOTEUR

(30) Priorität: 23.03.2006 DE 102006013859; 12.09.2006 DE 102006042645
(43) Veröffentlichungstag der Anmeldung: 17.12.2008
(73) Patentinhaber: Volkswagen Aktiengesellschaft, 38440 Wolfsburg (DE); Continental Automotive GmbH, 30165 Hannover (DE)
(72) Erfinder: SCHWARZ, Olaf, 38527 Meine-Abbesbüttel (DE); WOIKE, Rüdiger, 38104 Braunschweig (DE); SEIFERT, Jörg, 06118 Halle (DE); SCHMIDT, Reiner, 35435 Wettenberg (DE)
(74) Vertreter: Geske, Kerstin
(86) Internationale Anmeldenummer: PCT/EP2007/000961
(87) Internationale Veröffentlichungsnummer: WO 2007/110121

(56) Entgegenhaltungen:
- DE-A1- 3 210 044
- DE-A1- 10 330 275
- DE-C1- 10 205 796
- JP-A- 2000 301 932
- JP-A- 2000 311 554
- JP-A- 2004 133 655
- US-A1- 2005 061 645
- US-A1- 2005 061 647

## Beschreibung

Die Erfindung betrifft eine multifunktionale Anzeige- und Bedieneinrichtung in einem Kraftfahrzeug mit einem Anzeigefeld zum Anzeigen von Informationen und benachbart zu dem Anzeigefeld angeordneten Bedienelementen zur Anwahl von Funktionen.

In modernen Kraftfahrzeugen werden heutzutage vermehrt multifunktionale Anzeige- und Bedieneinrichtungen verwendet. Diese werden einerseits zum Anzeigen von Informationen über Zustände des Kraftfahrzeugs verwendet. Andererseits werden diese multifunktionalen Anzeige- und Bedieneinrichtungen verwendet, um Fahrzeugsysteme, beispielsweise ein Navigationssystem oder ein Autoradio zu steuern. Den einzelnen Bedienelementen kann eine feste Funktion zugewiesen sein. Im Stand der Technik werden jedoch multifunktionale Anzeige- und Bedieneinrichtungen bevorzugt, bei denen Informationen auf dem Anzeigefeld dargestellt werden, die Funktionszuweisungen zu den einzelnen Bedienelementen anzeigen. Dies geschieht beispielsweise, indem die einzelnen zugeordneten Funktionen benachbart zu den Bedienelementen auf dem Anzeigefeld dargestellt werden. Bei einer anderen Ausführungsform korrespondiert die Anordnung der Funktionen auf dem Anzeigefeld mit der Anordnung der Bedienelemente der multifunktionalen Anzeige- und Bedieneinrichtung. Eine solche multifunktionale Anzeige- und Bedieneinrichtung ist beispielsweise aus WO 00/21795 bekannt.

Bei den im Stand der Technik bekannten multifunktionalen Anzeige- und Bedieneinrichtungen sind die Bedienelemente als Hubtasten ausgeführt. Beim Betätigen dieser Hubtasten wird eine Hubbewegung senkrecht zur Bedienfläche der Tasten ausgeführt (US 2005/0061645 A1, US2005/0061647A1). Um eine zuverlässige und sichere Funktionsweise solcher Hubtasten zu gewährleisten, ist es notwendig, relativ große Spaltmaße zwischen einer Hubtaste und einer sie umgebenden Blende oder Führungseinrichtung vorzusehen. Auch benachbarte geordnete Bedienelemente müssen gewisse Spaltmaße einhalten, um zu verhindern, dass bei einer Betätigung einer ersten Taste eine andere Taste mit betätigt wird. Um eine möglichst große Anzahl von Bedienelementen auf einer Oberfläche einer multifunktionalen Anzeige- und Bedieneinrichtung unterbringen zu können, ist es jedoch wünschenswert, die Spaltabstände möglichst gering zu halten. Werden die Spaltabstände zu gering gewählt, so kann es beim Ausführen der Hubbewegung zu einem Verkanten oder Verklemmen der Tasten kommen.

Um eine Bedienung auch im Dunkeln zu ermöglichen, wird es bevorzugt, die Bedienelemente von einer Rückseite der Bedienfläche zu beleuchten. Hierbei ist es wünschenswert, eine möglichst große Fläche der Bedienfläche ausleuchten zu können. Um eine sichere Führung der Tasten zu erreichen, sind jedoch an dem der Bedienfläche abgewandten Seite der Taste Führungen vorgesehen, die insbesondere bei kleinen Tasten einen Großteil der Bedienfläche abgewandten Seite so eingrenzen, dass bei Hubtasten, die etwa 2 cm x 1,2 cm groß sind, nur ein Bereich von etwa 50 % der Bedienfläche beleuchtbar ist.

Insbesondere bei Hubtasten mit einer großen flächigen Ausdehnung oder (und) einem geringen Hub, ist es zum Erreichen eines zuverlässigen Schaltverhaltens meist notwendig, mehrere Schaltelemente oder eine Schaltelement zu verwenden, das mehrere räumlich getrennt voneinander ausgebildete Schaltvorrichtungen (beispielsweise in Schaltmatten ausgebildete Schaltdome) umfasst Siehe die DE 103 30 275 A1, die den Oberbegriff des Anspruchs 1 bildet. Dies hat seine Ursache darin, dass ansonsten bei einer nicht zentral an der Hubtaste angreifenden Betätigungskraft ein Verkanten der Hubtaste auftreten kann und ein zuverlässiges Auslösen eines Schaltvorgangs nicht bei jeder Betätigung sicher gewährleistet ist. Wünschenswert ist eine Einsparung von Schaltelementen bzw. Schaltvorrichtungen, ohne eine Einschränkung der Schaltzuverlässigkeit in Kauf nehmen zu müssen.

Es sind ferner Bedienelemente bekannt, die bei einer Betätigung eine Drehbewegung um eine Drehachse ausführen (JP 2000 311554 A, DE 32 10 044 A1). Ein Stößel, der an einer der Drehachse gegenüberliegenden Seite angeordnet ist, löst durch die Betätigung ein Schaltelement aus, woraufhin ein elektrisches Signal erzeugt wird.

Der Erfindung liegt das technische Problem zugrunde, eine verbesserte multifunktionale Anzeige- und Bedieneinrichtung zu schaffen, bei der eine verbesserte Bedienbarkeit erreicht wird, insbesondere kleinere Spaltabstände realisierbar sind und ein möglichst großer Anteil der Bedienfläche beleuchtbar ist.

Das technische Problem wird erfingdungsgemäß durch eine multifunktionale Anzeige- und Bedieneinrichtung mit den Merkmalen des Patentanspruchs 1 gelöst. Vorteilhafte Ausgestaltungen der Erfindung ergeben sich aus den Unteransprüchen.

Bei einer multifunktionalen Anzeige- und Bedieneinrichtung eingangs genannter Art ist hierfür vorgesehen, dass die Bedienelemente als Tasten ausgebildet sind, die jeweils um eine in oder an einem Endbereich der Tasten parallel zu der Anzeigenoberfläche verlaufenden Drehachse schwenkbar sind. Die Ausführung der Bedienelemente als drehbare Tasten bietet den Vorteil, dass die mechanischen Freiheitsgrade des Bedienelements bei einer Betätigung gegenüber einem als Hubtaste ausgebildeten Bedienelement verringert sind. Hierdurch ist es möglich, mindestens ein Spaltmaß bei einer gleichgroßen Bedienfläche geringer zu wählen als bei einer Hubtaste nach dem Stand der Technik. Hierdurch wird es möglich, Bedienelemente enger benachbart zueinander anzuordnen. Außerdem wird das Eintreten von Staub und Schmutz in einen Hohlraum zwischen die Taste und eine Blende oder einen Tastenkamm, der die Taste umgibt, erschwert. Hierdurch wird ein Verschmutzen der Anzeige- und Bedienvorrichtung, das eine Funktionstauglichkeit beeinträchtigen kann, verringert. Der Begriff Drehachse wird hier jeweils nur für eine virtuelle geometrische Achse verwendet, um die eine Drehbewegung ausgeführt wird oder ausführbar ist. Der Begriff Drehachse wird nicht zur Bezeichnung einer materiell ausgebildeten Achse verwendet. Durch die Beschränkung der Freiheitsgrade des Betätigungselements kann ein zuverlässiges Auslösen eines Schaltvorgangs mit nur einem Schaltelement bei jeder Betätigung sichergestellt werden. Im Gegensatz zu Hubtasten nach dem Stand der Technik, die zwei Schaltelemente oder eine Schaltelement mit zwei Schaltvorrichtungen umfassen, kann so eine elektronische Schaltung vereinfacht werden und Schaltelemente und/oder Schaltvorrichtungen eingespart werden. Die Tasten umfassen darüber hinaus jeweils ein in einer Tastetrappe ausgebildetes Drehlager, das mit einem Zylinder abschnitt eines Achselementes in Berührung ist. Insgesamt ergibt sich somit ein kostengünstigerer und einfacherer Aufbau einer multifunktionalen Anzeige- und Bedieneinrichtung.

Die Tasten können jeweils schwenkbar an einzelnen Achselementen gelagert sein. Eine besonders Platz sparende und die Spaltmaße gering haltende Ausführungsform erhält man, wenn mindestens zwei der Tasten gemeinsam an einem Achselement gelagert sind. Hierdurch kann zusätzlich auf einfache Weise sichergestellt werden, dass die beiden Tasten eine gemeinsame Drehachse aufweisen. Als eine Drehachse im Sinne des hier ausgeführten wird lediglich die abstrakte Achse bezeichnet, um die eine Drehung ausgeführt wird. Ein Achselement kann als zylinderförmige Achse ausgebildet sein. Ebenso ist es möglich, dass das Achselement nur einzelne zylinderförmig ausgebildete Abschnitte umfasst. Ferner sind Ausführungsformen bevorzugt, bei denen das Achselement Abschnitte umfasst, die nur einen Zylindersektor umfassen. Solche Achselemente sind ausreichend, da ein Winkel, um den die Tasten gedreht werden, in der Regel nur wenige Grad beträgt.

Um eine möglichst gute Ausleuchtung einer Bedienfläche der Tasten zu ermöglichen, ist es vorteilhaft, einen Hohlraum unterhalb der Tasten im Innern der multifunktionalen Anzeige- und Bedieneinrichtung zu schaffen. Ein beim Betätigen der Taste ausgelöstes Schaltelement ist somit vorzugsweise beabstandet von der Bedienfläche unterhalb der Taste angeordnet. Eine verbesserte Ausleuchtung der Bedienfläche der Taste kann somit bei einer Taste erreicht werden, bei der die Tasten einen von einer einer Bedienfläche gegenüberliegenden Seite vorspringenden Stößel umfassen, dessen eines Ende mit einem Schaltelement einer Schaltmatte beim Betätigen des Bedienelements wechselwirkt, wobei der Stößel an einem gegenüberliegenden Endbereich der Taste ausgebildet ist. Wird eine Verbindungslinie zwischen dem Endbereich und dem gegenüberliegenden Endbereich als Längsachse bezeichnet, so kann die Bedienfläche entlang der Längsachse in einem großen Bereich ausgeleuchtet werden, was eine Bedienbarkeit und einen Bedienkomfort im Dunkeln deutlich steigert. Auch die Tatsache, dass die Tasten an dem einen Endbereich um eine Drehachse schwenkbar sind, führt bereits dazu, dass eine Vielzahl von Führungen an einer der Bedienfläche abgewandten Seite der Taste eingespart werden können. Hierdurch wird eine Vergrößerung der beleuchtbaren Fläche der Bedienfläche erreicht.

Ein Bedienkomfort ist weiterhin bei eine Ausführungsform verbessert, bei der die Tasten jeweils eine Tastenkappe aus einem transparenten Grundmaterial umfassen, die zumindest an der Bedienfläche lackiert ist, wobei die Lackierung zum Ausbilden von Piktogrammen, Symbolen und/oder Schriftzeichen unterbrochen ist. Über die Beschriftung der Tastenkappen ist eine Dar stellung einer festen Funktionszuordnung zu den Bedienelementen möglich. Es ist ebenfalls möglich, hierüber nur eine bevorzugte Zuweisung deutlich zu machen. Der gegenüber herkömmlichen Hubtasten vergrößerte ausleuchtbare Bereich bei den erfindungsgemäßen Tasten ermöglicht es, mehr oder kompliziertere Schriftzeichen, Symbole und/oder Piktogramme oder größere Schriftzeichen und größere Symbole oder kompliziertere Piktogramme auf der Bedienfläche auszuleuchten. Hierdurch wird es möglich, ganze Worte in einer lesbaren Größe auf den Bedienflächen anzuordnen und nicht nur Abkürzungen zu verwenden.

Bei einer bevorzugten Ausführungsform ist der Stößel integral mit einem Stößelelement ausgebildet, das mit der Tastenkappe verbunden, vorzugsweise verrastet, ist, um die Taste an dem Achselement zu befestigen. Bei dieser Ausführungsform ist eine Montage der Tasten einfach möglich. Das Achsenelement wird zwischen das Stößelelement und die Tastenkappe geklemmt.

Für eine komfortable Bedienung einer multifunktionalen Anzeige- und Bedieneinrichtung ist es wichtig, dass ein Nutzer eine haptische Rückmeldung bei einer Betätigung eines Bedienelements erhält. Im Stand der Technik sind daher Bedienelemente bekannt, die in Schaltmatten angeordnete Schaltelemente umfassen. Diese sind im Stand der Technik so ausgebildet, dass bei einem Überschreiten eines so genannten Druckpunkts eine Gegenkraft des Schaltelements auf die Taste relativ abrupt abnimmt und hierbei zeitgleich ein klickendes Geräusch erzeugt wird. Dieses wird von manchen Nutzern als unangenehm empfunden. Eine besonders komfortable Ausführungsform der Erfindung sieht daher vor, dass durch das Schaltelement, das vorzugsweise als Schaltdom ausgebildet ist, eine der Betätigung entgegenwirkende Kraft beim Betätigen der Taste über den Stößel auf die Taste ausübt, wobei die Kraft zunächst mit zunehmender Auslenkung aus einer unbetätigten Stellung der Taste zunimmt, an einem Haptikpunkt ein lokales Maximum erreicht und bei weiter zunehmender Auslenkung abnimmt, bis an einem Anschlagpunkt, der einer Auslenkung entspricht, bei der ein Schaltvorgang des Schaltelements ausgelöst wird, ein lokales Minimum erreicht ist.

Bei einer besonders bevorzugten Ausführungsform der Erfindung ist vorgesehen, dass die über den Stößel übertragene Kraft im Haptikpunkt 1 - 6 N, bevorzugter 2 - 3 N, noch bevorzugter 2,5 - 2,8 N und am bevorzugtesten 2,7 N, und die über den Stößel wirkende Kraft im Anschlagpunkt 0,5 2,5 N beträgt. Bei diesen vorgeschlagenen Kraftwerten wird einem Nutzer zum einen durch das lokale Kraftmaximum am Haptikpunkt sicher vermittelt, dass er ein Bedienelement erfolgreich betätigt hat. Zugleich ist sichergestellt, dass die Auslösung des Schaltelements mit einer Mindestkraft am Anschlagpunkt erfolgt. Hierdurch wird gewährleistet, dass jeweils ein zuverlässiger Schaltvorgang ausgelöst wird. Ein störendes Geräusch beim Betätigen des Bedienelements wird nicht erzeugt. Für eine Definition des Messverfahrens wird auf die nachfolgende Figurenbeschreibung verwiesen.

Die Bedienmöglichkeiten einer Bedienvorrichtung werden dadurch stark erhöht, dass über die angezeigten Informationen eine Zuordnung der Bedienelemente zu den Funktionen angegeben ist. Hierdurch wird es möglich, unabhängig von einer Beschriftung der Tasten, mittels Schriftzeichen oder Symbolen oder Piktogrammen unterschiedliche Funktionen zuzuordnen.

Eine tastende, rein auf haptischen Eindrücken basierende Auswahl der Bedienelemente durch einen Nutzer wird dadurch ermöglicht, dass die Bedienfläche an dem gegenüberliegenden Endbereich in einer unbetätigten Stellung von der Bedienseite aus betrachtet aus einem Blendenrahmen oder Tastenkamm vorsteht. Eine übermäßige Krafteinwirkung, die zu einer Beschädigung des Schaltelementes führen kann, kann bei einer Ausführungsform vermieden werden, bei der die Bedienfläche an dem gegenüberliegenden Endbereich bei der Auslenkung, bei der der Schaltvorgang ausgelöst wird, bündig mit einem die Taste umgebenden Blendenrahmen oder Tastenkamm abschließt oder von der Bedienseite aus betrachtet in den Blendenrahmen oder Tastenkamm eintritt und in einem nicht ausgelenkten Zustand erhaben aus dem Blendenrahmen oder Tastenkamm vorsteht. Sobald die Taste an den Anschlagpunkt, an dem das Schaltelement betätigt wird, ausgelenkt ist, stößt ein die Taste betätigender Finger des Nutzers bei geeigneter Dimensionierung der Bedienfläche zumindest teilweise an die Blende oder den Tastenkamm. Hierdurch wird ein Teil der Kraft in die Blende oder den Tastenkamm abgeleitet, so dass eine übermäßige Krafteinwirkung vermieden wird. Dies gilt besonders auch dann, wenn die Bedienelemente in einem Bereich angeordnet sind, an denen ein Nutzer unbeabsichtigt mit Gegenständen gegen die Bedienelemente stoßen kann. Insbesondere an einem solchen Fall ist es vorteilhaft, die enorm großen Kräfte mit dem Blendenrahmen oder dem Tastenkamm abzufangen.

Die Erfindung wird nachfolgend anhand eines bevorzugten Ausführungsbeispiels näher erläutert. Hierbei zeigen:
- Fig. 1: einen Ausschnitt einer Draufsicht auf eine multifunktionale Anzeige- und Bedieneinrichtung;
- Fig. 2: eine schematische Schnittansicht durch ein Bedienelement der multifunktionalen Anzeige- und Bedieneinrichtung nach Fig. 1 im unbetätigten Zustand;
- Fig. 3: eine schematische Schnittansicht durch ein Bedienelement der multifunktionalen Anzeige- und Bedieneinrichtung nach Fig. 1 und 2 in einem betätigten Zustand; und
- Fig. 4: eine grafische Darstellung einer über einen Stößel auf ein Bedienelements von einem Schaltelement übertragenen Kraft aufgetragen gegen die Auslenkung des Bedienelements.

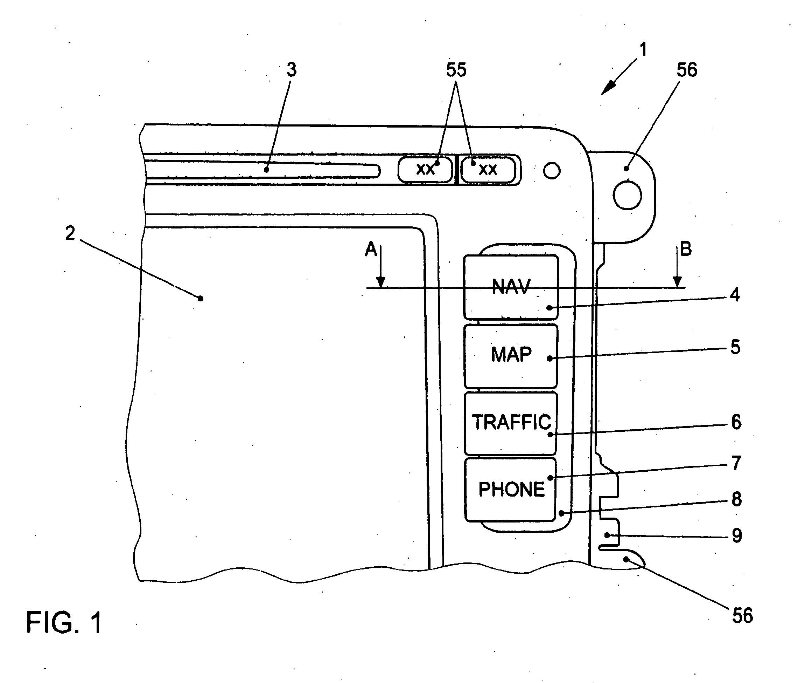

In Fig. 1 ist ein Ausschnitt einer multifunktionalen Anzeige- und Bedieneinrichtung 1 dargestellt. Die multifunktionale Anzeige- und Bedieneinrichtung 1 ist als Multimedia- und Navigationsgerät ausgebildet. Sie umfasst ein Anzeigefeld 2, auf dem Informationen dargestellt werden. In einem oberen Bereich ist ein Schlitz 3 sichtbar, in den Speichermedien, insbesondere optische Speichermedien wie CDs, DVDs, etc., eingeführt werden können. Benachbart zu dem Anzeigefeld 2 sind Bedienelemente 4-7 angeordnet. Die Bedienelemente 4-7 sind als Tasten ausgebildet, die um eine parallel zur Zeichnungsebene verlaufende Drehachse drehbar sind. Die Bedienelemente 4-7 sind von einem Tastenkamm 8 umgeben. Die Spaltmaße zwischen den Bedienelementen 4-7 und dem Tastenkamm 8 können geringer gewählt werden, als bei einer Ausführungsform, bei der die Bedienelemente als Hubtasten ausgebildet wären. Der Tastenkamm 8 ist in eine Gehäuseblende 9 der multifunktionalen Anzeige- und Bedieneinrichtung 1 eingepasst, vorzugsweise mittels einer Rastverbindung. Um eine leichte Erkennbarkeit der Bedienelemente 4-7 zu erreichen, weist der Tastenkamm 8 eine Oberflächenbeschaffenheit auf, die Licht im sichtbaren Bereich bei anderen Wellenlängen absorbiert/reflektiert als Bedienflächen der Bedienelemente 4-7. Bevorzugt ist eine Oberflächengestaltung der Bedienflächen in schwarz und des Tastenkamms in weiß gehalten. Da der optische Eindruck dem eines Klaviers ähnelt, werden solche Tasten daher als Klaviertasten bezeichnet.

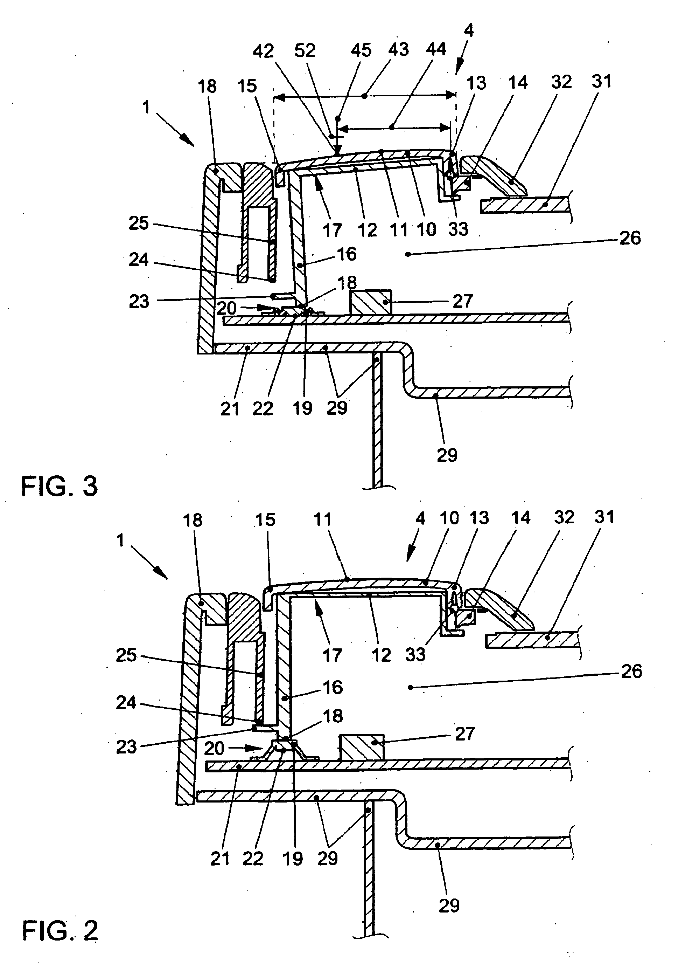

In Fig. 2 ist eine schematische Schnittdarstellung entlang der Schnittlinie A-B durch das Bedienelement 4 bzw. einen Teil der multifunktionalen Anzeige- und Bedieneinrichtung 1 dargestellt. Gleiche technische Merkmale sind mit identischen Bezugszeichen bezeichnet. Das Bedienelement 4 ist in einem unbetätigten Zustand dargestellt. Das Bedienelement 4 umfasst eine Tastenkappe 10, deren obere Seite als Bedienfläche 11 ausgebildet ist. Die Tastenkappe 10 ist aus einem transparenten Grundmaterial hergestellt. Auf der Bedienfläche 11 ist die Tastenkappe 10 lackiert. An einigen Stellen ist der Lack mittels eines Lasers nach dem Lackieren entfernt worden, um Buchstaben oder Symbole in den Lack zu schreiben bzw. zu zeichnen. Bei dem Bedienelement 4 nach Fig. 1 sind die Buchstaben "NAV" auf diese Weise auf der Bedienfläche 11 angebracht. Im Bereich der Buchstaben ist die Bedienfläche somit transparent.

Das als Taste ausgebildete Bedienelement 4 umfasst zusätzlich zu der Tastenkappe 10 ein Stößelelement 12, das mit der Tastenkappe fest verbunden ist, vorzugsweise mittels einer Rast- oder Clipsverbindung. Das Bedienelement 4 ist an einem Endbereich 13 an einem Achselement 14 drehbar um eine Drehachse gelagert, die senkrecht zur Zeichenebene verläuft. Das Stößelelement 12 umfasst an einem gegenüberliegenden Endbereich 15 des Bedienelements 4 bzw. der Taste einen Stößel 16. Der Stößel 16 springt von einer der Bedienfläche 11 gegenüberliegenden Seite 17 vor. Ein Ende 18 des Stößels 16 liegt an einem Schaltdom 19 eines Schaltelements 20 an. Der Schaltdom 19 ist vorzugsweise Bestandteil einer Schaltmatte. Das Schaltelement 20 umfasst den Schaltdom 19 sowie Leiterbahnen auf einer Leiterplatte 21, die bei einem Kontakt einer Kontaktfläche 22 des Schaltdoms 19 mit den Leiterbahnen auf der Leiterplatte 21 kontaktiert werden. Der Schaltdom 19 umfasst ein elastisches Material. Dieses kann im unbetätigten Zustand bei Anliegen des Endes 18 des Stößels 16 leicht vorgespannt sein. Hierdurch wird ein Vorsprung 23 des Stößels 16 gegen ein unteres Ende 24 eines Schenkels 25 des Tastenkamms 8 gedrückt. Hierdurch ist gewährleistet, dass die Taste im unbetätigten Zustand in einer definierten Auslenkung gehalten wird. Ein Schwingen oder Klappern der Tasten bei Vibrationen eines Kraftfahrzeugs, in dem die multifunktionale Anzeige- und Bedieneinrichtung eingebaut ist, wird so wirkungsvoll verhindert.

Das Stößelelement 12 ist vorzugsweise, ebenso wie die Tastenkappe 10, aus einem transparenten Grundmaterial gefertigt. In einem Hohlraum 26 zwischen der Leiterplatte 21 und der gegenüberliegenden Seite 17 des Bedienelementes 4 ist ein Leuchtmittel 27 angeordnet. Dieses ist vorzugsweise auf der Leiterplatte 21 befestigt. Bei dem Leuchtmittel 27 kann es sich um eine Leuchtdiode (LED) oder eine Glimmlampe oder ein beliebiges anderes Leuchtmittel handeln. Ebenso kann in den Hohlraum 26 Licht mittels einer Faser geleitet werden. Zusätzlich zu dem Leuchtmittel 27 können weitere optische Komponenten (nicht dargestellt) vorgesehen sein, um eine Ausleuchtung der Bedienfläche oder der vom Lack befreiten Abschnitte der Bedienfläche 11 zu verbessern. Der Tastenkamm 8 ist in eine Gehäuseblende 9 eingepasst und mit dieser vorzugsweise mittels einer Rastverbindung verbunden. Die Gehäuseblende 9 sowie die Leiterplatte 21 sind vorzugsweise an einem aus Metall gefertigten Gehäuse 29 befestigt.

Ein Rand 31 des Anzeigefelds 2 sowie ein Teil des Achsenelements 14 sind mittels einer Abdeckblende 32 abgedeckt. Das Achselement 14 umfasst einen Zylindersektorabschnitt 33. Mit diesem Zylindersektorabschnitt 33 des Achselements 14 ist ein in der Tastenkappe 10 ausgebildetes Drehlager in Berührung. Insgesamt ist das Achsenelement 14 zwischen das Stößelelement 12 und die Tastenkappe 10 geklemmt. Das Achsenelement 14 kann beliebige Ausgestaltungen annehmen, solange eine Drehbewegung der Taste bzw. des Bedienelements 4 um eine Drehachse möglich ist, die parallel zu einer Fläche des Anzeigefelds 2 verläuft. Bei einer besonders bevorzugten Ausführungsform nutzen mindestens zwei benachbarte Bedienelemente ein gemeinsames Achsenelement 14. Hierdurch können besonders geringe Spaltmaße zwischen den Bedienelementen erreicht werden. Sind die Bedienelemente so wie die Bedienelemente 4-7 nach Fig. 1 ausgebildet, dass sie an dem Endbereich 13, an oder durch den die Drehachse verläuft, etwas breiter als in dem restlichen Bereich ausgebildet sind, so weisen die benachbarten Bedienelemente 4-7 nur kleine Kontaktflächen auf, wenn sie direkt nebeneinander auf einem gemeinsamen Achselement 14 angeordnet sind. Die Oberflächen der Bedienelemente 4-7 können so gestaltet sein, dass die Haftreibung zwischen den benachbarten Bedienelementen 4-7 bei einer Betätigung eines der Bedienelemente 4-7 nicht ausreicht, um das benachbarte Bedienelement 4-7 ebenfalls zu betätigen. Hierdurch ist somit ein sehr geringes Spaltmaß zwischen den Bedienelementen realisierbar.

In Fig. 3 ist eine schematische Schnittansicht durch das Bedienelement 4 nach Fig. 1 und 2 in einem betätigten Zustand dargestellt. Der Schaltdom 19 des Schaltelements 20 ist so verformt, dass die Kontaktfläche 22 mit den Leiterbahnen (nicht dargestellt) der Leiterplatte 21 in Kontakt ist. Die Taste bzw. das Bedienelement 4 ist so ausgestaltet, dass die Bedienfläche 11 in dem betätigten Zustand, d.h. wenn der Stößel 16 oder der Schaltdom 19 in einem Anschlagpunkt sind, an dem gegenüberliegenden Endbereich 15, mit dem Tastenkamm 8 oder der Gehäuseblende 9 abschließt oder leicht in den Tastenkamm 12 oder die Gehäuseblende 9 eintritt. Im unbetätigten Zustand steht die Bedienfläche 11 am gegenüberliegenden Endbereich 15 gegenüber dem Tastenkamm 8 oder der Gehäuseblende 9 vor (vergleiche Fig. 2).

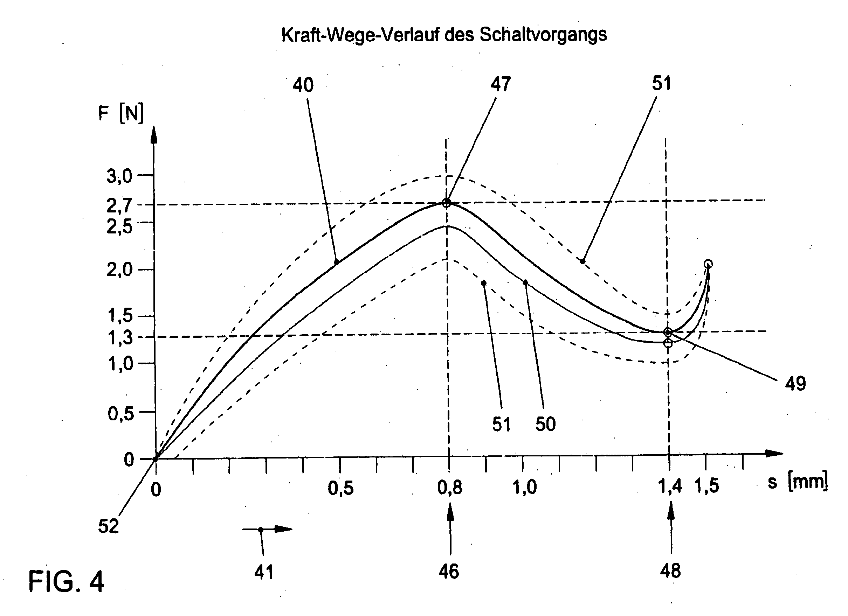

In Fig. 4 ist Kraft 40 in Abhängigkeit von einer Auslenkung 41 des Bedienelements 4 aufgetragen, die von dem Schaltelement 20 bzw. dem Schaltdom 19 über den Stößel 16 bei einem Betätigen des Bedienelements 4 auf dieses senkrecht zu der Leiterplatte 21 ausgeübt wird. Gemessen wird die Kraft an einem Messpunkt 42, der in Fig. 3 schematisch eingezeichnet ist. Bei einer Taste, die sich in einer Längsrichtung 43 quer zur Drehachse (vergleiche Fig. 3) etwa 21 mm erstreckt, befindet sich der Messpunkt 42, gemessen parallel zu der Leiterplatte oder dem Anzeigefeld, wie mittels eines Doppelpfeils 44 in Fig. 3 angedeutet, 13 mm von der Drehachse entfernt auf der Bedienfläche 11. Die Auslenkung 41 des Messpunkts 42 wird senkrecht zur Leiterplatte bestimmt, wie mittels eines Richtungspfeils 45 in Fig. 3 angedeutet ist (hierbei wird von einem Einbau der Leiterplatte 21 in der Weise ausgegangen, dass sie parallel zu einer Oberfläche des Anzeigefelds 2 eingebaut ist, das eben ist oder als Ebene approximiert wird). Im unbetätigten Zustand, einem Nullpunkt 52 (vgl. auch Fig. 3), beträgt die Auslenkung somit 0 mm. Wird das Bedienelement 4 betätigt, so steigt die Kraft 40, die das Schaltelement 20 über den Stößel 16 auf das Bedienelement überträgt, zunächst stetig an. Bei einer Auslenkung von 0,8 mm, die als Haptikpunkt 46 bezeichnet wird, erreicht die Kraft 40 ein lokales Maximum 47. Bei einer zunehmenden Auslenkung sinkt die ausgeübte Kraft 40 erneut ab, bis sie an einem Anschlagpunkt 48 ein lokales Minimum 49 erreicht. Bei dieser Auslenkung wird der Schaltvorgang des Schaltelements 10 ausgelöst. Wird das Bedienelement über den Anschlagpunkt 48 ausgelenkt, so steigt die Kraft 40 sehr steil an (nicht vollständig, d.h. nur angedeutet dargestellt). Ein solcher dargestellter Kraftverlauf lässt sich mit einem Schaltdom 19 realisieren. Es sind jedoch auch Ausführungsformen denkbar, bei denen das Schaltelement 20 mehrere, beispielsweise jeweils als Schaltdom ausgebildete Schaltvorrichtungen umfassen. Die dargestellten Werte stellen bevorzugte Werte dar. Die untere Kurve 50 stellt den Kraftverlauf dar, der über den Stößel 16 bei einer Rückwärtsbewegung in die nicht betätigte Stellung auf das Bedienelement 4 einwirkt. Die gestrichelten Linien 51 geben bevorzugte Toleranzwerte der Kraft 40 an. Die dargestellten Werte sind bevorzugte Optimalwerte. Die Kraft im Haptikpunkt 46 sollte zwischen 1 - 6 N, vorzugsweise zwischen 2 - 3 N, bevorzugter zwischen 2;5 - 2,8 N und am bevorzugtesten 2,7 N betragen. Die Kraft am Anschlagpunkt sollte vorzugsweise zwischen 0,5 - 2,5 N und am bevorzugtesten 1,3 N betragen. Die in Figur 4 angegebenen Absolutwerte für Kraft und Auslenkung stellen für eine Taste mit einer Längsabmessung quer zur Drehachse von etwa 21 mm ermittelte Optimalwerte dar, die in einem Abstand (angedeutet durch den Doppelpfeil 44 in Fig. 3) von 13 mm von der Drehachse gemessen sind. Die gemessenen Werte ergeben sich bei einer statischen Messung. Dieses bedeutet, die Auslenkung wird so langsam vorgenommen, dass dynamische Effekte, die sich beispielsweise bei einem sprungartigen Umschnappen von Wänden des Schaltdoms ergeben, unberücksichtigt bleiben.

Außer den als Klaviertasten ausgebildeten Bedienelementen 4-7 kann die multifunktionale Anzeige- und Bedieneinrichtung 1 auch als Hubtasten ausgebildete weitere Bedienelemente 55 umfassen, die beispielsweise den Auswurf von Speichermedien steuern, die in den Schlitz 3 eingeführt werden. Die weiteren Bedienelement 55 sind zwischen dem Schlitz 3 und einer von mehreren Befestigungsösen 56 angeordnet, die vorzugsweise einstückig mit Teil des Gehäuses 29 (vgl. Fig. 2) ausgebildet sind und eine Ebene parallel zu dem Anzeigefeld 2 aufspannen.

### Bezugszeichenliste

- 1: multifunktionale Anzeige- und Bedieneinrichtung
- 2: Anzeigefeld
- 3: Schlitz
- 4-7: Bedienelemente
- 8: Tastenkamm
- 9: Gehäuseblende
- 10: Tastenkappe
- 11: Bedienfläche
- 12: Stößelelement
- 13: Endbereich der Taste bzw. des Bedienelements 4
- 14: Achselement
- 15: gegenüberliegender Endbereich der Taste bzw. des Bedienelements 4
- 16: Stößel
- 17: den Stößel 16 der Bedienfläche gegenüberliegende Seite der Taste bzw. des Bedienelements 4
- 18: Ende des Stößels
- 19: Schaltdom
- 20: Schaltelement
- 21: Leiterplatte
- 22: Kontaktfläche
- 23: Vorsprung
- 24: unteres Ende des Schenkels 25
- 25: Schenkel
- 26: Hohlraum
- 27: Leuchtmittel
- 29: Gehäuse
- 31: Rand des Anzeigefelds 2
- 32: Abdeckblende
- 33: Achszylindersektor
- 40: Kraft
- 41: Auslenkung
- 42: Messpunkt
- 43: Längsrichtung
- 44: Doppelpfeil
- 45: Richtungspfeil
- 46: Hapitkpunkt
- 47: lokales Maximum
- 48: Anschlagpunkt
- 49: lokales Minimum
- 50: untere Kurve (einwirkende Kraft bei Rückbewegung)
- 51: Linien (die Toleranzwerte angeben)
- 52: Nullpunkt
- 55: weitere Bedienelemente
- 56: Befestigungsösen

## Patentansprüche

1. Multifunktionale Anzeige- und Bedieneinrichtung (1) in einem Kraftfahrzeug mit einem Anzeigefeld (2) zum Anzeigen von Informationen und benachbart zu dem Anzeigefeld (2) angeordneten Bedienelementen (4-7) zur Anwahl von Funktionen, wobei die Bedienelemente (4-7) als Tasten ausgebildet sind, die jeweils um eine in oder an einem Endbereich (13) der Tasten parallel zu einer Oberfläche des Anzeigefeldes (2) verlaufenden Drehachse drehbar sind,
**dadurch gekennzeichnet, dass**
die Tasten jeweils ein in einer Tastenkappe (10) ausgebildetes Drehlager umfassen, das mit einem Zylindersektorabschnitt (33) eines Achselements (14) in Berührung ist.

2. Multifunktionale Anzeige- und Bedieneinrichtung (1) nach Anspruch 1, **dadurch gekennzeichnet, dass** mindestens zwei der Tasten gemeinsam an dem Achselement (14) drehbar gelagert sind.

3. Multifunktionale Anzeige- und Bedieneinrichtung (1) nach Anspruch 2, **dadurch gekennzeichnet, dass** das in der jeweiligen Tastenkappe (10) ausgebildete Drehlager in Form einer Nut in der Tastenkappe ausgebildet ist.

4. Multifunktionale Anzeige- und Bedieneinrichtung (1) nach einem der vorangehenden Ansprüche, **dadurch gekennzeichnet, dass** das Achselement (14) als zylinderförmige Achse ausgebildet ist.

5. Multifunktionale Anzeige- und Bedieneinrichtung (1) nach einem der Ansprüche 1 bis 3, **dadurch gekennzeichnet, dass** das Achselement (14) Abschnitte umfasst, die nur einen Zylindersektor umfassen.

6. Multifunktionale Anzeige- und Bedieneinrichtung (1) nach einem der Ansprüche 1 bis 3, **dadurch gekennzeichnet, dass** Achselement (14) nur einzelne zylinderförmig ausgebildete Abschnitte umfasst.

7. Multifunktionale Anzeige- und Bedieneinrichtung (1) nach einem der vorangehenden Ansprüche, **dadurch gekennzeichnet, dass** die Tasten einen von einer einer Bedienfläche gegenüberliegenden Seite (17) vorspringenden Stößel (16) umfassen, dessen eines Ende (18) mit einem Schaltelement (20) einer Schaltmatte beim Betätigen des Bedienelements (4-7) wechselwirkt, wobei der Stößel (16) an einem gegenüberliegenden Endbereich (15) der Taste ausgebildet ist.

8. Multifunktionale Anzeige- und Bedieneinrichtung (1) nach einem der vorangehenden Ansprüche, **dadurch gekennzeichnet, dass** die Tasten jeweils eine Tastenkappe (10) aus einem transparenten Grundmaterial umfassen, die zumindest an der Bedienfläche (11) lackiert ist, wobei die Lackierung zum Ausbilden von Symbolen , Piktogrammen und/oder Schriftzeichen unterbrochen ist.

9. Multifunktionale Anzeige- und Bedieneinrichtung (1) nach einem der vorangehenden Ansprüche, **dadurch gekennzeichnet, dass** ein Stößelelement mit der Tastenkappe (10) verbunden, vorzugsweise verrastet, ist, um die Taste an dem Achsenelement (14) zu befestigen.

10. Multifunktionale Anzeige- und Bedieneinrichtung (1) nach Anspruch 9, **dadurch gekennzeichnet, dass** der Stößel (16) integral mit einem Stößelelement (12) ausgebildet ist.

11. Multifunktionale Anzeige- und Bedieneinrichtung (1) nach einem der vorangehenden Ansprüche, **dadurch gekennzeichnet, dass** durch das Schaltelement (10), das vorzugsweise einen Schaltdom (19) umfasst, eine der Betätigung entgegenwirkende Kraft beim Betätigen der Taste über den Stößel (16) auf die Taste ausgeübt, die zunächst mit zunehmender Auslenkung aus einer unbetätigten Stellung zunimmt, an einem Haptikpunkt (46) ein lokales Maximum (47) erreicht und bei weiter zunehmender Auslenkung abnimmt, bis an einem Anschlagpunkt (48), der einer Auslenkung entspricht, bei der ein Schaltvorgang des Schaltelements (20) ausgelöst wird, ein lokales Minimum (49) erreicht ist.

12. Multifunktionale Anzeige- und Bedieneinrichtung (1) nach einem der vorangehenden Ansprüche, **dadurch gekennzeichnet, dass** die über den Stößel (16) übertragene Kraft im Haptikpunkt (46) 1 - 6 N, bevorzugter 2 - 3 N, noch bevorzugter 2,5 - 2,8 N und am bevorzugtesten 2,7 N und die über den Stößel (16) übertragene Kraft am Anschlagpunkt (48) 0,5 - 2,5 N beträgt.

13. Multifunktionale Anzeige- und Bedieneinrichtung (1) nach einem der vorangehenden Ansprüche, **dadurch gekennzeichnet, dass** über die angezeigten Informationen eine Zuordnung der Bedienelemente (4-7) zu den Funktionen angeben ist.

14. Multifunktionale Anzeige- und Bedieneinrichtung (1) nach einem der vorangehenden Ansprüche, **dadurch gekennzeichnet, dass** die Bedienfläche (11) an dem gegenüberliegenden Endbereich (15) bei der Auslenkung, bei der der Schaltvorgang ausgelöst wird, bündig mit einem die Taste umgebenden Blendenrahmen oder Tastenkamm (8) abschließt oder von der Bedienseite aus betrachtet in den Blendenrahmen oder Tastenkamm (8) eintritt und in einem nicht ausgelenkten Zustand erhaben aus dem Blendenrahmen oder Tastenkamm (8) vorsteht.

## Claims

1. Multifunctional display and operating device (1) in a motor vehicle, with a display, panel (2) for displaying information and operating elements (4-7) which are arranged adjacent to the display panel and are intended for the selection of functions, wherein the operating elements (4-7) are designed as buttons which are each rotatable about an axis of rotation running in or at an end region (13) of the buttons parallel to a surface of the display panel (2), **characterized in that** the buttons each comprise a rotary bearing which is formed in a button cap (10) and is in contact with a cylindrical sector (33) of a spindle element (14).

2. Multifunctional display and operating device (1) according to Claim 1, **characterized in that** at least two of the buttons are jointly mounted rotatably on the spindle element (14).

3. Multifunctional display and operating device (1) according to Claim 2, **characterized in that** the rotary bearing formed in each button cap (10) is designed in the form of a groove in the button cap.

4. Multifunctional display and operating device (1) according to one of the preceding claims, **characterized in that** the spindle element (14) is designed as a cylindrical spindle.

5. Multifunctional display and operating device (1) according to one of Claims 1 to 3, **characterized in that** the spindle element (14) comprises sections which only comprise one cylindrical sector.

6. Multifunctional display and operating device (1) according to one of Claims 1 to 3, **characterized in that** the spindle element (14) comprises only individual sections of cylindrical design.

7. Multifunctional display and operating device (1) according to one of the preceding claims, **characterized in that** the buttons comprise a ram (16) which projects from a side (17) opposite an operating surface and one end (18) of which interacts with a switching element (20) of a switching mat when the operating element (4-7) is actuated, wherein the ram (16) is formed at an opposite end region (15) of the button.

8. Multifunctional display and operating device (1) according to one of the preceding claims, **characterized in that** the buttons each comprise a button cap (10) made of a transparent basic material, said button cap being varnished at least on the operating surface (11), the varnishing being interrupted in order to form symbols, pictograms and/or characters.

9. Multifunctional display and operating device (1) according to one of the preceding claims, **characterized in that** a ram element is connected, preferably latched, to the button cap (10) in order to fasten the button to the spindle element (14).

10. Multifunctional display and operating device (1) according to Claim 9, **characterized in that** the ram (16) is formed integrally with a ram element (12).

11. Multifunctional display and operating device (1) according to one of the preceding claims, **characterized in that**, when the button is actuated, the switching element (10), which preferably comprises a switching dome (19), exerts a force, which opposes the actuation, on the button via the ram (16), said force initially increasing with increasing deflection out of an unactuated position, reaching a local maximum (47) at a haptic point (46) and, as the deflection increases further, decreasing until a local minimum (49) is achieved at a stop point (48) which corresponds to a deflection at which a switching operation of the switching element (20) is triggered.

12. Multifunctional display and operating device (1) according to one of the preceding claims, **characterized in that** the force transmitted via the ram (16) is 1-6 N, preferably 2-3 N, even more preferably 2.5-2.8 N and most preferably 2.7 N at the haptic point (46), and the force transmitted via the ram (16) is 0.5-2.5 N at the stop point (48).

13. Multifunctional display and operating device (1) according to one of the preceding claims, **characterized in that** an assignment of the operating elements (4-7) to the functions is specified via the displayed information items.

14. Multifunctional display and operating device (1) according to one of the preceding claims, **characterized in that**, in the case of the deflection at which the switching operation is triggered, the operating surface (11) at the opposite end region (15) ends flush with a cover frame or button ridge (8) surrounding the button or, as viewed from the operating side, enters the cover frame or button ridge (8) and, in a non-deflected state, protrudes in a raised manner from the cover frame or button ridge (8).

## Revendications

1. Dispositif de commande et d'affichage multifonction (1) dans un véhicule automobile comprenant un champ d'affichage (2) pour afficher des informations et des éléments de commande (4-7) disposés à côté du champ d'affichage (2), pour la sélection de fonctions, les éléments de commande (4-7) étant réalisés sous forme de touches qui peuvent chacune tourner autour d'un axe de rotation s'étendant dans ou sur une région d'extrémité (13) des touches parallèlement à une surface du champ d'affichage (2),
**caractérisé en ce que**
les touches comprennent à chaque fois un palier pivotant réalisé dans un chapeau de touche (10), lequel est en contact avec une portion de secteur cylindrique (33) d'un élément d'axe (14).

2. Dispositif de commande et d'affichage multifonction (1) selon la revendication 1, **caractérisé en ce qu'**au moins deux des touches sont montées à rotation en commun sur l'élément d'axe (14).

3. Dispositif de commande et d'affichage multifonction (1) selon la revendication 2, **caractérisé en ce que** le palier pivotant réalisé dans chaque chapeau de touche (10) est réalisé sous forme de rainure dans le chapeau de touche.

4. Dispositif de commande et d'affichage multifonction (1) selon l'une quelconque des revendications précédentes, **caractérisé en ce que** l'élément d'axe (14) est réalisé sous forme d'axe cylindrique.

5. Dispositif de commande et d'affichage multifonction (1) selon l'une quelconque des revendications 1 à 3, **caractérisé en ce que** l'élément d'axe (14) comprend des portions qui ne comprennent qu'un secteur cylindrique.

6. Dispositif de commande et d'affichage multifonction (1) selon l'une quelconque des revendications 1 à 3, **caractérisé en ce que** l'élément d'axe (14) comprend seulement des portions individuelles réalisées sous forme cylindrique.

7. Dispositif de commande et d'affichage multifonction (1) selon l'une quelconque des revendications précédentes, **caractérisé en ce que** les touches comprennent une tige poussoir (16) saillant depuis un côté (17) opposé à une surface de commande, une extrémité (18) de la tige poussoir coopérant avec un élément de commutation (20) d'un tapis de commutation lors de l'actionnement de l'élément de commande (4-7), la tige poussoir (16) étant réalisée au niveau d'une région d'extrémité opposée (15) de la touche.

8. Dispositif de commande et d'affichage multifonction (1) selon l'une quelconque des revendications précédentes, **caractérisé en ce que** les touches comprennent à chaque fois un chapeau de touche (10) constitué d'un matériau de base transparent, lequel chapeau de touche est vernis au moins au niveau de la surface de commande (11), le vernissage étant interrompu pour réaliser des symboles, des pictogrammes et/ou des caractères.

9. Dispositif de commande et d'affichage multifonction (1) selon l'une quelconque des revendications précédentes, **caractérisé en ce qu'**un élément de tige poussoir est connecté au chapeau de touche (10), de préférence par encliquetage, afin de fixer la touche sur l'élément d'axe (14).

10. Dispositif de commande et d'affichage multifonction (1) selon la revendication 9, **caractérisé en ce que** la tige poussoir (16) est réalisée intégralement avec un élément de tige poussoir (12).

11. Dispositif de commande et d'affichage multifonction (1) selon l'une quelconque des revendications précédentes, **caractérisé en ce que** grâce à l'élément de commutation (10) qui comprend de préférence un dôme de commutation (19), une force opposée à l'actionnement est exercée sur la touche lors de l'actionnement de la touche par le biais de la tige poussoir (16), laquelle augmente d'abord avec un écartement croissant de la position non actionnée, atteint un maximum local (47) au niveau d'un point haptique (46), et diminue en cas d'écart croissant supplémentaire, jusqu'à ce qu'un minimum local (49) soit atteint en un point de butée (48) qui correspond à un écartement auquel une opération de commutation de l'élément de commutation (20) est déclenchée.

12. Dispositif de commande et d'affichage multifonction (1) selon l'une quelconque des revendications précédentes, **caractérisé en ce que** la force transmise par la tige poussoir (16) au point haptique (46) vaut 1 - 6 N, de préférence 2 - 3 N, plus préférablement 2,5 - 2,8 N, et le plus préférablement 2,7 N, et la force transmise par le biais de la tige poussoir (16) au point de butée (48) vaut 0,5 - 2,5 N.

13. Dispositif de commande et d'affichage multifonction (1) selon l'une quelconque des revendications précédentes, **caractérisé en ce qu'**une affectation des éléments de commande (4 - 7) aux fonctions est réalisée par le biais des informations affichées.

14. Dispositif de commande et d'affichage multifonction (1) selon l'une quelconque des revendications précédentes, **caractérisé en ce que** la surface de commande (11) au niveau de la région d'extrémité opposée (15) lors de l'écartement auquel l'opération de commutation est déclenchée, est en affleurement avec un cadre de bandeau entourant la touche ou un peigne à touches (8), ou, considéré depuis le côté de commande, entre dans le cadre de bandeau ou le peigne à touches (8), et dans un état non dévié, fait saillie en rehaussement hors du cadre de bandeau ou du peigne à touches (8).
